# EUROPÄISCHE PATENTANMELDUNG

(11) **EP 1 188 644 A1**
(43) Veröffentlichungstag der Anmeldung: **20.03.2002**
(21) Anmeldenummer: 01119572.4
(22) Anmeldetag: 16.08.2001
(51) Int. Cl.: B62D 23/00, B62D 27/02

(54) **Herstellverfahren für einen Fahrzeughilfsrahmen**

(30) Priorität: 13.09.2000 DE 10045230
(71) Anmelder: Bayerische Motoren Werke Aktiengesellschaft, 80809 München (DE)
(72) Erfinder: Mehnert, Stefan, 81675 München (DE); Denk, Rudolf, 82105 Gilching (DE); Zeiler, Markus, 84494 Neumarkt St. Veit (DE)

(57) **Zusammenfassung**

Die Erfindung betrifft ein Herstellverfahren für einen Fahrzeug-Hilfsrahmen, insbesondere einen Achsträger oder einen damit verbundenen Lenker oder dgl., der aus verschiedenen Komponenten zusammengesetzt wird, welche durch Magnetimpulsschweißen derart durch elektromagnetisches Umformen miteinander verbunden werden, dass eine metallurgische Verbindung zwischen diesen Komponenten entsteht. Bevorzugt ist zumindest eine der miteinander zu verbindenden Komponenten rohrförmig und auf oder in einen korrespondierenden Abschnitt der anderen Komponente aufgesteckt oder eingesteckt, wobei im sog. Verbindungsabschnitt der beiden Komponenten zumindest eine der beiden konisch geformt sein kann. Insbesondere besteht zumindest eine der miteinander zu verbindenden Komponenten aus einer Aluminiumlegierung oder einem anderen Leichtmetall.

## Beschreibung

Die Erfindung betrifft ein Herstellverfahren für einen Fahrzeug-Hilfsrahmen, insbesondere einen Achsträger oder einen damit verbundenen Lenker oder dgl., der aus verschiedenen Komponenten zusammengesetzt wird. Zum technischen Umfeld wird neben der DE 199 22 800 A1 auf die US 5,981,921 verwiesen.

Fahrzeug-Achsträger, d.h. allgemein Fzg.-Hilfsrahmen, die aus sog. Knotenteilen und damit verbundenen Rohren aufgebaut sind, oder damit verbundene Lenker, d.h. Schub-Zug-Stangen, die im wesentlichen aus einem Rohr und einem damit verbundenen Anbauteil bestehen, können unter Anwendung verschiedener Verbindungstechniken hergestellt werden, d.h. die einzelnen Komponenten dieser Baugruppen können auf unterschiedliche Weise miteinander verbunden werden. So können - wie die eingangs erstgenannte DE 199 22 800 A1 wiedergibt - die besagten Komponenten durch Schweißen oder durch Bilden einer formschlüssigen Verbindung durch Magnetumformen miteinander verbunden werden.

Bevorzugt wird eine derartige Bauweise gewählt, wenn zumindest eine der Komponenten in Leichtmetall, bevorzugt einer geeigneten Aluminiumlegierung ausgeführt ist. Zum Erzeugen einer standfesten Schweißverbindung ist dann bspw. das MIG-Schweißen erforderlich, wobei jedoch der damit verbundene Wärmeeintrag eine Materialschwächung hervorrufen oder zu Wärmeverzügen führen kann.

Diese Problematik tritt zwar bei der Verbindungs-Herstellung durch Magnetumformen nicht auf, jedoch kann hier bei Temperaturschwankungen ein Atmen der Verbindung, d.h. geringfügige Relativbewegungen zwischen den solchermaßen miteinander verbundenen Komponenten, nicht sicher ausgeschlossen werden. Auch bei mechanischer Belastung sind bei magnetumgeformten Komponenten-Verbindungen unerwünschte Mikrobewegungen zwischen den Komponenten möglich und es kann eine ungleichmäßige Krafteinleitung über diese Verbindung erfolgen, die eine unerwünscht hohe Materialbeanspruchung hervorruft.

Ein demgegenüber verbessertes Herstellverfahren für einen Fahrzeug-Hilfsrahmen, insbesondere einen Achsträger oder einen damit verbundenen Lenker oder dgl., der aus verschiedenen Komponenten zusammengesetzt wird, aufzuzeigen, ist Aufgabe der vorliegenden Erfindung.
Die Lösung dieser Aufgabe ist dadurch gekennzeichnet, dass die besagten Komponenten durch Magnetimpulsschweißen derart durch elektromagnetisches Umformen miteinander verbunden werden, dass eine metallurgische Verbindung zwischen diesen Komponenten entsteht. Vorteilhafte Weiterbildungen sind Inhalt der Unteransprüche.

Erfindungsgemäß soll das an sich bekannte Magnetimpulsschweißen, welches in der eingangs zweitgenannten US 5,981,921 für die Herstellung einer Verbindung zwischen dem Kardangelenk und dem Wellenabschnitt einer Fahrzeug-Antriebswelle beschrieben ist, zur Anwendung kommen. Eine erfindungsgemäße Schweißverbindung erlaubt somit ein Verschweißen jeweils günstigster Materialien der einzelnen Komponenten, wobei Dauerhaltbarkeit der Verbindung gewährleistet ist und danach optimal die auftretenden Kräfte (und zwar sowohl Axialkräfte, als auch Torsions- und Biegekräfte) übertragen werden können.

Bevorzugt ist zumindest eine der miteinander zu verbindenden Komponenten rohrförmig und auf oder in einen korrespondierenden Abschnitt der anderen Komponente aufgesteckt oder eingesteckt, wonach das Magnetimpulsschweißen durchgeführt wird. Dabei wird durch magnetisches Beschleunigen die Wand der rohrförmigen Komponente derart intensiv auf den sog. korrespondierenden Abschnitt der anderen Komponente gepresst, dass in diesem Verbindungsbereich eine metallurgische Verbindung zwischen den beiden Komponenten entsteht.

Beispielsweise kann auf diese Weise ein Aluminium-Rohr mit einem Aluminium-Gußknoten oder einem Lenker-Anbauteil verbunden werden, derart, dass das Aluminium-Rohr (= die rohrförmige Komponente) zunächst einen geringfügig größeren Innendurchmesser besitzt als den Außendurchmesser des korrespondierenden Abschnittes des Gußknotens oder Anbauteiles (= der anderen Komponente), d.h. dass die rohrförmige Komponente auf die andere Komponente aufgesteckt wird. Dann wird hierzu ein Elektromagnet bevorzugt in Form einer zylindrischen Spule, evtl mit einem Feldformer, deren/dessen Innendurchmesser geringfügig größer ist als der Außendurchmesser des Aluminium-Rohres über den sog. Verbindungsbereich der beiden Komponenten geschoben oder es werden die genannten miteinander zu verbindenden Komponenten in eine geeignete Spulenanordnung (ggf. mit Feldformer) eingeschoben. Daraufhin wird das (grundsätzlich bekannte) Magnetimpulsschweißen durch kurzzeitiges Anlegen eines elektrischen Stromes hoher Stärke an die Spule ausgelöst. Hierdurch wird in der Spule impulsartig ein Magnetfeld erzeugt, das durch Wechselwirkung mit dem Rohr in dessen Wand einen hohen elektrischen Strom induziert, der wiederum ein Magnetfeld erzeugt, das so gerichtet ist, dass schlagartige Kaltumformungen der Rohr-Wand im wesentlichen radial nach innen erfolgen. Durch diese Kaltumformung bzw. dieses magnetische Beschleunigen der Rohr-Wand in Richtung zum Gußknoten oder Anbauteil wird die Rohr-Wand quasi in den korrespondierenden Abschnitt des Gußknotens oder Anbauteiles hinein gedrückt, wodurch eine metallurgische Verbindung zwischen den beiden Komponenten hergestellt wird.

Aufgrund dieser metallurgischen Verbindung, die quasi eine Schweißverbindung darstellt, können nicht nur hohe Kräfte übertragen werden, sondern es sind auch jegliche Mikrobewegungen zwischen den beiden Komponenten ausgeschlossen. Dabei ist in vorteilhafter Weise eine Kombination verschiedener Materialien für die beiden Komponenten möglich.

Neben einer zylindrischen Formgebung kann im übrigen im Verbindungsbereich bzw. Verbindungsabschnitt der beiden Komponenten zumindest eine der beiden konisch geformt sein, d.h. dass zurückkommend auf das oben beschriebene Beispiel die Wand des Gußknotens oder Anbauteiles in Richtung der Längsachse des Aluminium-Rohres betrachtet im wesentlichen konisch verlaufend ausgebildet ist, während das Rohr selbst vor Durchführen des Magnetimpulsschweißens zylindrisch verlaufen kann. Dabei können die einzelnen Abmessungen sowie die Prozessparameter, insbesondere auch die gepulste Magnetisierung so eingestellt bzw. optimiert werden, dass eine optimale Magnetimpuls-Schweißverbindung entsteht, d.h. die gewünschte metallurgische Verbindung zwischen den beiden Komponenten gebildet wird.

Als besondere Vorteile sind noch zu nennen, dass die zum Einsatz kommenden Komponenten bzw. Bauteile einfach aufgebaut und bearbeitet werden können, und dass insbesondere auch der vorgeschlagene Fertigungsprozess sehr einfach ist. Erzielbar ist hiermit eine gleichmäßige und flächige Krafteinleitung und es tritt vorteilhafterweise kein Schweißverzug auf, wie überhaupt keine Nacharbeit erforderlich ist. Ebenso ist kein Kühlen der Bauteile beim Herstellen der Verbindung erforderlich, so dass sehr kurze Zykluszeiten realisiert werden können, wobei noch darauf hingewiesen sei, dass durchaus eine Vielzahl von Details abweichend von obiger Beschreibung gestaltet sein kann, ohne den Inhalt der Patentansprüche zu verlassen.

## Patentansprüche

1. Herstellverfahren für einen Fahrzeug-Hilfsrahmen, insbesondere einen Achsträger oder einen damit verbundenen Lenker oder dgl., der aus verschiedenen Komponenten zusammengesetzt wird, welche durch Magnetimpulsschweißen derart durch elektromagnetisches Umformen miteinander verbunden werden, dass eine metallurgische Verbindung zwischen diesen Komponenten entsteht.

2. Herstellverfahren nach Anspruch 1,
**dadurch gekennzeichnet, dass** zumindest eine der miteinander zu verbindenden Komponenten rohrförmig ist und auf oder in einen korrespondierenden Abschnitt der anderen Komponente aufgesteckt oder eingesteckt ist.

3. Herstellverfahren nach Anspruch 2,
**dadurch gekennzeichnet, dass** im Verbindungsabschnitt der beiden Komponenten zumindest eine der beiden konisch geformt ist.

4. Herstellverfahren nach einem der vorangegangenen Ansprüche,
**dadurch gekennzeichnet, dass** zumindest eine der miteinander zu verbindenden Komponenten aus einer Aluminiumlegierung oder einem anderen Leichtmetall besteht.
